# FASCICULE DE BREVET EUROPEEN

(11) **EP 3 007 803 B1**
(45) Date de publication et mention de la délivrance du brevet: **20.02.2019**
(21) Numéro de dépôt: 14811587.6
(22) Date de dépôt: 19.05.2014
(51) Int. Cl.: B01D 53/14, C10L 3/10

(54) **PROCÉDÉ DE DÉCARBONATATION D'UN GAZ HYDROCARBONÉ**
VERFAHREN ZUR ENTKARBONISIERUNG EINES KOHLENWASSERSTOFFBASIERTEN GASES
PROCESS FOR DECARBONATION OF A HYDROCARBON-BASED GAS

(30) Priorité: 14.06.2013 FR 1355593
(43) Date de publication de la demande: 20.04.2016
(73) Titulaire: IFP Energies nouvelles, 92500 Rueil-Malmaison (FR)
(72) Inventeur: GONNARD, Sebastien, F-69290 Grezieu la Varenne (FR); LALOUE, Nicolas, 69007 Lyon (FR); LEROY, Agnès, F-69007 Lyon (FR); PERDU, Gauthier, F-92150 Suresnes (FR)
(74) Mandataire: IFP Energies nouvelles
(86) Numéro de dépôt international: PCT/FR2014/051153
(87) Numéro de publication internationale: WO 2014/199036

(56) Documents cités:
- EP-A1- 0 107 046
- EP-A1- 1 428 864
- FR-A1- 2 895 273
- FR-A1- 2 916 652
- FR-A1- 2 956 038
- US-A- 5 820 837

## Description

La présente invention concerne le domaine de la décarbonatation par lavage avec un solvant d'un gaz hydrocarboné, par exemple un gaz naturel. En particulier, l'invention propose un procédé pour séparer, lors de la régénération, la majeure partie des hydrocarbures co-absorbés par le solvant de la majeure partie des gaz acides absorbés par le solvant. Le procédé permet ainsi de contrôler la teneur en hydrocarbures en tête de régénérateur.

Il est connu d'utiliser des solvants liquides régénérables thermiquement pour extraire les composés acides contenus dans un gaz, en particulier dans un gaz naturel. Parmi les solvants les plus couramment utilisés, on peut citer les solutions aqueuses d'amines, et certains solvants physiques tels que le sulfolane, le méthanol, la N-formyl morpholine, l'acétyl morpholine, le carbonate de propylène.

Ces procédés comportent en général une étape d'extraction du CO₂ contenus dans le gaz à traiter par mise en contact de ce gaz avec le solvant régénéré, dans un absorbeur opérant à la pression du gaz à traiter, suivie d'une étape de régénération thermique, opérant généralement à une pression légèrement supérieure à la pression atmosphérique, généralement entre 1 et 5 bars, préférentiellement comprise entre 1,5 et 3 bars. Cette régénération thermique s'effectue généralement dans une colonne équipée au fond d'un rebouilleur et en tête d'un condenseur permettant de refroidir les composés acides libérés par la régénération et de recycler les condensats en tête du régénérateur à titre de reflux.

Lorsque la pression du gaz à traiter est notablement supérieure à la pression atmosphérique, par exemple dans le cas d'un gaz naturel devant être traité sous une pression de l'ordre de 70 bar, le solvant riche en gaz acides obtenu en fond d'absorbeur peut contenir des quantités notables d'hydrocarbures dissous. Il est alors courant d'utiliser une étape de libération de ces hydrocarbures dissous vaporisés par la simple détente du solvant riche en gaz acides. Cette détente s'effectue à une pression intermédiaire entre celle du gaz brut à traiter et celle de l'étape thermique de régénération, typiquement de l'ordre de 5 à 15 bars. On sépare ainsi du solvant riche en CO₂, un gaz contenant les hydrocarbures dissous les plus légers et majoritaires en volumes, qui peut être utilisé comme gaz de combustion. Ce gaz est parfois lavé par un flux de solvant régénéré issu de l'étape thermique de manière à réabsorber les composés acides libérés lors de la détente. Ce lavage du gaz libéré par la détente s'effectue en général dans une colonne placée directement sur le ballon de séparation entre le gaz et le liquide détendu. Le solvant ainsi chargé en composés acides est directement mélangé avec le solvant détendu et envoyé vers l'étape de régénération thermique.

Deux approches de ce type sont décrites dans les publications US 5 820 837 A et EP 0 107 046 A1.

De manière à réduire les consommations de chaleur de ces procédés, on met généralement en oeuvre une étape d'échange thermique entre le solvant riche, après détente, et le solvant régénéré obtenu chaud en fond de la colonne de régénération.

La régénération de ces solvants produit un effluent gazeux riche en composés acides. Lorsque le gaz brut contient des quantités notables d'hydrocarbures lourds (par exemple, quelques centaines de ppmV), ces gaz se retrouvent en quantités notables dans le gaz acide en tête de régénérateur. En effet, l'étape de détente du solvant riche en gaz acide obtenu en fond d'absorbeur, si elle permet de libérer l'essentiel des hydrocarbures légers (méthane, éthane...) dissous dans le solvant en fond d'absorbeur, ne permet pas d'extraire la majeure partie des composés plus lourds. Il est alors courant d'obtenir un gaz acide en tête du régénérateur pouvant contenir plusieurs centaines de ppmv d'hydrocarbures. La teneur notable de ces composés dans le gaz acide induit une augmentation de la teneur en VOC ("Volatile Organic Compounds") et peut entraîner le non respect de la spécification VOC. Dans un évent, les VOC se composent des composés hydrocarbures suivants : Les alcanes linéaires (le méthane est parfois exclu); les cycloalcanes, les aromatiques (Benzene, toluene, Ethyl Benzene et xylenes). Il est alors nécessaire de prévoir une étape de post traitement du gaz acide, comme par exemple une incinération qui peut s'avérer coûteuse en équipements et très énergivore (consommation de gaz de combustion).

Il arrive, notamment en cas de décarbonatation, que le gaz acide soit réinjecté dans le puits afin de faciliter l'étape d'extraction (EOR). Pour ce faire, il est nécessaire de comprimer le gaz acide saturé en vapeur d'eau. Cette compression nécessitant plusieurs étages génère des condensats d'eau. Les hydrocarbures présents dans le gaz acide se retrouvent alors dans ces condensats aqueux, ce qui augmente notablement le coût du traitement associé des condensats pour retirer les hydrocarbures polluants (notamment aromatiques).

Pour remédier à ces inconvénients, il est possible d'adsorber les hydrocarbures présents dans le gaz acide sur un matériau approprié (par exemple Charbon actif). Cette méthode nécessite l'installation d'une unité additionnelle de traitement qui peut s'avérer coûteuse en investissement (cas d'un adsorbant régénérable) ou en dépenses d'opération (cas des adsorbants non régénérables).

La présente invention propose un procédé simple et peu coûteux, car ne nécessitant qu'un petit nombre d'équipements additionnels, pour séparer, lors de la régénération, la majeure partie des hydrocarbures co-absorbés par le solvant de la majeure partie des gaz acides absorbés par le solvant. Le procédé y parvient en utilisant un système de flash BP (basse pression), permettant ainsi de contrôler la teneur en hydrocarbures en tête de régénérateur.

Le procédé permet ainsi de contrôler la teneur en hydrocarbures en tête de régénérateur. Cela offre les avantages suivants :
- En optimisant les conditions de température et de pression du flash BP, il est possible d'obtenir un gaz acide qui peut être remis à l'atmosphère sans recours à une étape de post-traitement qui doit habituellement faire respecter les normes environnementales en terme de teneur en VOC, notamment en présence de composés aromatiques.
- Il est alors possible de supprimer l'incinérateur dédié à la destruction des hydrocarbures présents dans le gaz acide. Bien entendu, un incinérateur est nécessaire pour purifier les évents des ballons de détente BP mais ce dernier sera plus petit car le débit de gaz à incinérer est grandement inférieur (5 à 15 % du débit de gaz acide).
- Le débit de gaz à incinérer étant inférieur, la consommation de Gaz de fuel dédiée à l'incinération sera elle aussi notablement réduite.
- Le débit d'amine à régénérer étant légèrement inférieur avec la présente invention, un gain est aussi réalisé sur la taille du régénérateur et sur la charge du rebouilleur.
- Pour des applications de décarbonatation, le gaz acide obtenu avec la présente invention contient de l'eau et du CO₂ et beaucoup moins d'hydrocarbures. Si le gaz acide doit être réinjecté pour faire de la récupération assistée (EOR), les traitements habituellement nécessaires pour purifier les condensats (ici de l'eau) extraits des différents étages de compression sont fortement réduits, voire supprimés. Du fait de sa pureté, l'eau pourra dans certains cas être directement recyclée dans l'unité

Amine avant une consommation d'eau d'appoint réduite.
- La consommation énergétique du procédé, afin qu'il respecte les normes environnementales, est sensiblement réduite, du fait de la faible consommation en gaz de combustion selon le schéma de la présente invention.

### Le procédé selon l'invention

De façon générale, l'invention concerne un procédé de décarbonatation par lavage avec un solvant d'un gaz hydrocarboné, par exemple un gaz naturel, dans lequel on effectue les étapes suivantes:
a) on met en contact ledit gaz avec une solution absorbante de manière à obtenir un gaz appauvri en CO₂ et une solution absorbante chargée en CO₂ ;
b) on chauffe et on détend la solution absorbante chargée en CO₂ à une pression et une température déterminées de manière à libérer une fraction gazeuse comportant des hydrocarbures et à obtenir une solution absorbante appauvrie en hydrocarbures, ladite pression et ladite température étant choisies de sorte que ladite fraction gazeuse comporte au moins 50% des hydrocarbures contenu dans ladite solution absorbante chargée en CO₂ et au plus 35 % de CO₂ contenu dans ladite solution absorbante chargée en CO₂ ;
c) on régénère thermiquement la solution absorbante appauvrie en composés hydrocarbures de manière à libérer un effluent gazeux riche en CO₂ et à obtenir un solution absorbante régénérée.

Selon l'invention, la pression et la température peuvent être choisies de sorte que la fraction gazeuse comporte au moins 70% des hydrocarbures contenu dans la solution absorbante chargée en CO₂ et moins de 30 % de CO₂ contenu dans la solution absorbante chargée en CO₂.

La température peut être comprise entre celle de la solution absorbante chargée en CO₂ obtenue après l'étape a) et celle de la solution absorbante régénéré obtenu après l'étape c), et la pression peut être supérieure à la pression atmosphérique.

La température peut par exemple être comprise entre 50°C et 140°C, et la pression comprise entre 1.5 et 6 bars.

Selon l'invention, au moins une partie de la solution absorbante régénérée obtenue à l'étape c) peut être recyclée à l'étape a) en tant que solution absorbante.

Selon l'invention, avant l'étape b) on détend la solution absorbante chargée en CO₂ à une pression P2 comprise entre la pression utilisée à l'étape b) et une pression utilisée à l'étape a), et à une température sensiblement identique à celle de la solution absorbante chargée en CO₂ obtenue après l'étape a). La pression P2 peut être comprise entre 5 et 15 bars.

Selon l'invention, la solution absorbante peut comporter une amine ou un mélange d'amines en solution dans de l'eau. L'amine peut être choisie parmi le groupe comportant les amines primaires, les amines secondaires, les amines secondaires stériquement encombrées, les amines tertiaires et des mélanges d'amines tertiaires et d'amines primaires ou secondaires.

L'amine primaire peut être choisie, seule ou en mélange, parmi la monoéthanolamine (MEA), l'aminoéthyléthanolamine (AEEA), la diglycolamine, la 2-amino-2-méthyl-1-propanol et ses dérivés non N substitués.

L'amine secondaire peut être choisie, seule ou en mélange, parmi la diéthanolamine (DEA), la diisopropanolamine (DIPA), la pipérazine et ses dérivés dans lequels au moins un atome d'azote n'est pas substitué, la morpholine et ses dérivés non N substitués, la pipéridine et ses dérivés non N substitués, la N-(2'-hydroxyéthyl)-2-amino-2-méthyl-1-propanol , la N-(2'-hydroxypropyl)-2-amino-2-méthyl-1-propanol, la N-(2'-hydroxybutyl)-2-amino-2-méthyl-1-propanol.

L'amine tertiaire peut être est choisie, seule ou en mélange, parmi la méthyldiéthanolamine (MDEA), la triéthanolamine (TEA), l'éthyldiéthanolamine, la diéthyléthanolamine, la diméthyléthanolamine, la 1-méthyl-4-(3-diméthylaminopropyl)-pipérazine, la 1-éthyl-4-(diéthylaminoéthyl), la 1-méthyl-4-hydroxy-pipéridine, la 1-méthyl-2-hydroxyméthyl-pipéridine, la 1,2-bis-(2-diméthylaminoéthoxy)-éthane, le Bis(diméthylamino-3-propyl)éther, le Bis(diéthylamino-3-propyl)éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther, la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, la N-isopropyl-N-(3-méthoxypropyl)-1-amino-2-butanol, la 1-(4-morpholino)-2-(méthylisopropylamino)-éthane, la 1-(4-morpholino)-2-(méthyltertiobutylamino)-éthane, la 1-(4-morpholino)-2-(diisopropylamino)-éthane, la 1-(4-morpholino)-2-(1-pipéridinyl)-éthane et la tertiobutyldiéthanolamine.

L'amine secondaire encombrée peut être choisie, seule ou en mélange, parmi la N-(2'-hydroxyéthyl)-2-amino-2-méthyl-1-propanol, la N-(2'-hydroxypropyl)-2-amino-2-méthyl-1-propanol, la N-(2'-hydroxybutyl)-2-amino-2-méthyl-1-propanol.

Les mélanges d'amines tertiaires et d'amines primaires ou secondaires, les amines primaires ou secondaires peuvent être choisies parmi le groupe comportant, la Monoéthanolamine, la Diéthanolamine, la N-butyléthanolamine, la Aminoéthyléthanolamine, la Diglycolamine, la Pipérazine, la 1-Méthylpipérazine, la 2-Méthylpipérazine, la N-(2-hydroxyéthyl)pipérazine, la N-(2-aminoéthyl)pipérazine, la Morpholine, la 3-(méthylamino)propylamine, la 1,6-hexanediamine et tous ses dérivés diversement N-alkylés tels par exemple la N,N'-diméthyl-1,6-hexanediamine, la N-méthyl-1,6-hexanediamine ou la N,N',N'-triméthyl-1,6- hexanediamine.

La solution absorbante peut être choisie parmi le groupe constitué du sulfolane, le méthanol, la N-formyl morpholine, l'acétyl morpholine, le carbonate de propylène, le diméthyl éther polyethylène glycol ou la N-méthyl pyrrolidone ou un mélange d'amine avec un solvant physique et de l'eau.

Selon l'invention, le gaz peut être un gaz naturel.

Le gaz peut comporter au moins 50 ppmv d'hydrocarbures. Il peut comporter moins de 100 ppmv d'H₂S.

Enfin, l'invention concerne également un procédé dans lequel on injecte dans un milieu souterrain l'effluent gazeux riche en CO₂ obtenu à l'issue de l'étape c), dans un procédé de récupération assistée d'hydrocarbures.

D'autres caractéristiques et avantages du procédé selon l'invention, apparaîtront à la lecture de la description ci-après d'exemples non limitatifs de réalisations, en se référant aux figures annexées et décrites ci-après.

### Présentation succincte des figures

- la figure 1 schématise un mode de réalisation du procédé selon l'art antérieur,
- la figure 2 schématise un mode de réalisation du procédé selon l'invention.

### Description détaillée du procédé

La présente invention propose une méthode simple et peu coûteuse car ne nécessitant qu'un petit nombre d'équipements additionnels, pour séparer la majeure partie des hydrocarbures co-absorbés par le solvant de la majeure partie des gaz acides absorbés par le solvant et ainsi de contrôler la teneur en hydrocarbures en tête de régénérateur.

Elle concerne, de manière générale, un procédé de décarbonatation par lavage avec un solvant d'un gaz hydrocarboné, par exemple un gaz naturel, dans lequel on effectue les étapes suivantes :
a) on met en contact ledit gaz avec une solution absorbante de manière à obtenir un gaz appauvri en CO₂ et une solution absorbante chargée en CO₂,
b) on chauffe et on détend la solution absorbante chargée en CO₂ à une pression et une température déterminées de manière à libérer une fraction gazeuse comportant des hydrocarbures et à obtenir une solution absorbante appauvrie en hydrocarbures, ladite pression et ladite température étant choisies de sorte que ladite fraction gazeuse comporte au moins 50% des hydrocarbures contenu dans ladite solution absorbante chargée en CO₂ et au plus 35 % de CO₂ contenu dans ladite solution absorbante chargée en CO₂. On élimine les hydrocarbures de la phase concentrée par une étape d'incinération dédiée.
c) on régénère thermiquement la solution absorbante appauvrie en composés hydrocarbures de manière à libérer un effluent gazeux riche en CO₂ et à obtenir une solution absorbante régénérée. La régénération thermique peut être une distillation ou bien un entraînement des composés acides par de la vapeur, opération couramment nommé "strippage".

Selon un mode de réalisation, au moins une partie de la solution absorbante régénérée obtenue à l'étape c) est recyclée à l'étape a) en tant que solution absorbante.

A l'étape b) la solution absorbante est chauffée préférentiellement par échange avec un fluide du procédé à travers un échangeur de chaleur, mais tout autre moyen de chauffage permettant d'obtenir une température adéquat peut être utilisé. La solution absorbante ainsi chauffée subit une détente à une pression et une température déterminée de manière à libérer une fraction gazeuse comportant majoritairement des hydrocarbures et à obtenir une solution absorbante appauvrie en hydrocarbures. Les conditions de pression et température sont optimisées de sorte que la fraction gazeuse comporte au moins 50 % des hydrocarbures contenus dans la solution absorbante chargée en gaz acides et au plus 35 % des gaz acides contenus dans la solution absorbante chargée.

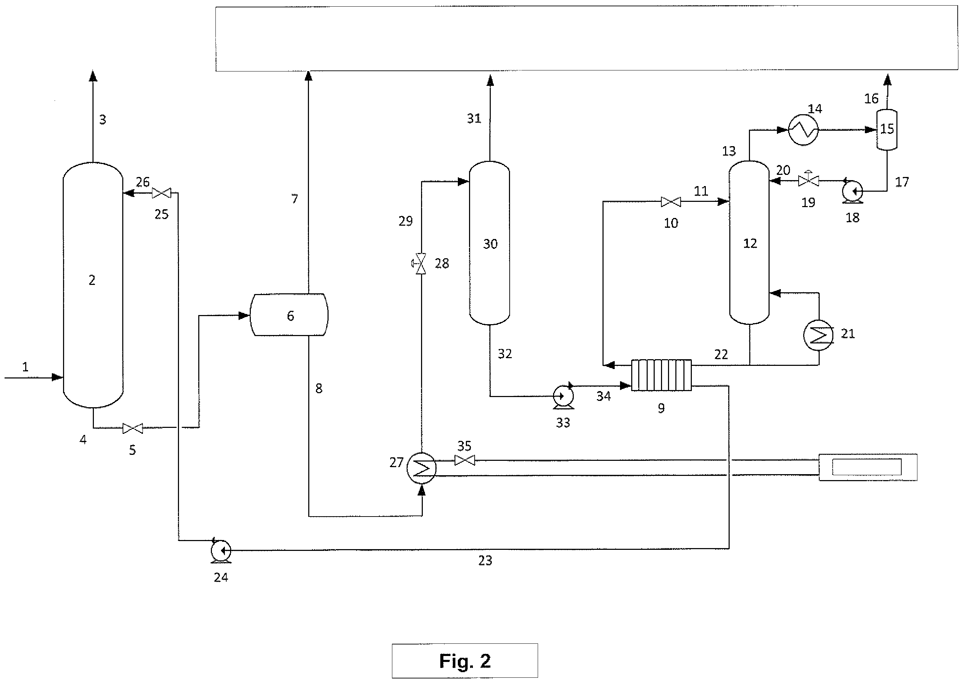

En référence à la figure 2, le gaz à traiter est admis par la ligne 1 en fond d'un absorbeur 2. En tête de l'absorbeur 2, on récupère le gaz dont sont extraits les gaz acides absorbés par le solvant, injecté en tête d'absorbeur par la ligne 26, ainsi que les fractions des composés co-absorbés, notamment les hydrocarbures. Cet absorbeur opère en général à des températures proches ou légèrement supérieures à la température ambiante, typiquement comprises entre 20 et 100 °C, préférentiellement comprises entre 30 et 90 °C, et à des pressions typiquement comprises entre 10 et 200 bars, préférentiellement entre 20 et 100 bars.

Le gaz arrivant par le conduit 1 peut être un gaz naturel disponible à une pression comprise entre 10 et 200 bars, et à une température comprise entre 20 et 100 °C. Ce gaz comporte du CO₂, éventuellement d'autres composés acides tels que de l'H2S, du COS, des mercaptans et des hydrocarbures.

Le solvant riche en gaz acides obtenu en fond d'absorbeur par la ligne 4 est détendu par un moyen de détente 5, et admis dans un premier ballon de détente 6. Cette première étape de détente permet d'obtenir par la ligne 7 un gaz contenant la majeure partie des hydrocarbures légers co-absorbés par le solvant. Ce gaz peut éventuellement être lavé par une fraction du solvant régénéré et le gaz ainsi obtenu peut être utilisé comme gaz de fuel. Un tel lavage, facultatif, n'est cependant pas représenté ici. Le ballon de détente 6 opère à une pression P2 inférieure à celle de l'absorbeur 2 et supérieure à celle du ballon de détente 30. Cette pression est généralement fixée par les conditions d'utilisation du gaz de fuel, typiquement de l'ordre de 5 à 15 bars. Ce ballon opère à une température sensiblement identique à celle du solvant obtenu en fond de l'absorbeur 2.

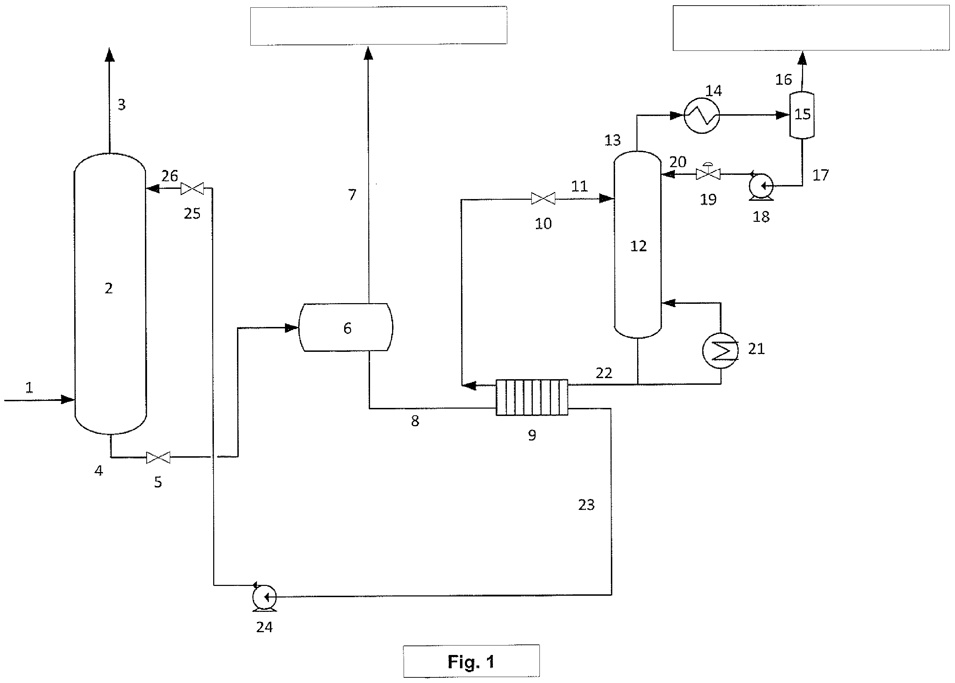

Le solvant riche en gaz acides obtenu après détente est envoyé par la ligne 8 vers un moyen de préchauffage. On a représenté sur la Figure 1 un échangeur de chaleur 27 avec une utilité chaude mais tout autre moyen adéquat de préchauffage par échange avec des fluides à disposition peut être utilisé du moment qu'il permet de porter la température du solvant riche en gaz acide au niveau requis pour réaliser une vaporisation partielle des composés absorbés par le solvant.

Le solvant riche en gaz acides préchauffé est admis par la ligne 29, après détente éventuelle par un moyen de détente 28, dans le ballon 30 où s'effectue la séparation des gaz vaporisés et du solvant riche en gaz acides. Ce ballon 30 est opéré dans des conditions de température et de pression telles qu'on obtienne une vaporisation d'une fraction minoritaire de gaz acides absorbés par le solvant, généralement inférieure à 35 %, préférentiellement inférieure à 30 %, et d'une fraction majoritaire des hydrocarbures absorbés par le solvant, supérieure à 50 %, préférentiellement supérieure à 70 %. La pression du ballon 30 est inférieure à celle du ballon 6 et elle est supérieure à la pression atmosphérique, préférentiellement comprise entre 1.5 et 6 bars. La température du ballon 30 est comprise entre celle du solvant chargé en gaz acides obtenu en fond de l'absorbeur 2 et celle du solvant régénéré obtenu en fond du régénérateur 12. Cette température peut être comprise entre 50°C et 140°C.

Le solvant obtenu en fond du ballon 30 est envoyé par la ligne 32, la pompe 33 et la ligne 34 vers un moyen de préchauffage. On a représenté sur la Figure 2 un échangeur de chaleur 9 avec le solvant régénéré obtenu en fond de la colonne de régénération 12, mais tout autre moyen adéquat de préchauffage peut être utilisé. Le solvant riche en gaz acide ainsi préchauffé est admis par la ligne 11, après détente éventuelle par un moyen de détente 10, en tête du régénérateur 12. Dans ce régénérateur, les composés acides absorbés par le solvant, notamment le CO₂, sont vaporisés par effet couramment nommé "strippage" avec de la vapeur générée par le rebouilleur 21 en fond du régénérateur. Ces gaz sont récupérés par la ligne 13 en tête du régénérateur, refroidis dans l'échangeur 14 et l'eau ainsi que le solvant contenu dans le gaz de tête du régénérateur qui sont majoritairement condensés, séparés dans le ballon de reflux 15 et recyclés comme reflux en tête de régénérateur par la ligne 20. Les conditions de température et de pression opératoires du régénérateur sont fonction du type de solvant mis en oeuvre. Le régénérateur 12 opère sous une pression généralement comprise entre la pression atmosphérique et 10 bars, préférentiellement comprise entre 1,05 et 3 bars. La température en fond du régénérateur est généralement comprise entre 100 et 200 °C, préférentiellement comprise entre 110 et 150 °C.

En fond du régénérateur 12, on obtient par la ligne 22 un flux de solvant régénéré chaud qui, après échange de chaleur avec le solvant riche en gaz acides dans l'échangeur 9, est recyclé via la ligne 23, la pompe 24 et la ligne 26 en tête de l'absorbeur 2.

Les gaz libérés par vaporisation partielle dans le ballon 30 sont envoyés par la ligne 31 vers un incinérateur dédié. Les gaz acides séparés dans le ballon 15 sont admis dans la ligne 16 et peuvent être soit rejetés, soit envoyés vers un train de compression pour faire de l'EOR.

### La solution absorbante

La solution absorbante comporte une amine ou un mélange d'amines en solution dans de l'eau. Les amines peuvent être choisies parmi le groupe comportant les amines primaires, les amines secondaires, les amines secondaires stériquement encombrées, les amines tertiaires et des mélanges d'amines tertiaires et d'amines primaires ou secondaires.

Concernant les amines primaires, elles peuvent être choisies, seule ou en mélange, parmi la monoéthanolamine (MEA), l'aminoéthyléthanolamine (AEEA), la diglycolamine, la 2-amino-2-méthyl-1-propanol et ses dérivés non N substitués.

Concernant les amines secondaires, elles peuvent être choisies, seule ou en mélange, parmi la diéthanolamine (DEA), la diisopropanolamine (DIPA), la pipérazine et ses dérivés dans lesquels au moins un atome d'azote n'est pas substitué, la morpholine et ses dérivés non N substitués, la pipéridine et ses dérivés non N substitués, la N-(2'-hydroxyéthyl)-2-amino-2-méthyl-1-propanol , la N-(2'-hydroxypropyl)-2-amino-2-méthyl-1-propanol, la N-(2'-hydroxybutyl)-2-amino-2-méthyl-1-propanol.

Concernant les amines tertiaires, elles peuvent être choisies, seule ou en mélange, parmi la méthyldiéthanolamine (MDEA), la triéthanolamine (TEA), l'éthyldiéthanolamine, la diéthyléthanolamine, la diméthyléthanolamine, la 1-méthyl-4-(3-diméthylaminopropyl)-pipérazine, la 1-éthyl-4-(diéthylaminoéthyl), la 1-méthyl-4-hydroxy-pipéridine, la 1-méthyl-2-hydroxyméthyl-pipéridine, la 1,2-bis-(2-diméthylaminoéthoxy)-éthane, le Bis(diméthylamino-3-propyl)éther, le Bis(diéthylamino-3-propyl)éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther, la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, la N-isopropyl-N-(3-méthoxypropyl)-1-amino-2-butanol, la 1-(4-morpholino)-2-(méthylisopropylamino)-éthane, la 1-(4-morpholino)-2-(méthyltertiobutylamino)-éthane, la 1-(4-morpholino)-2-(diisopropylamino)-éthane, la 1-(4-morpholino)-2-(1-pipéridinyl)-éthane et la tertiobutyldiéthanolamine.

Concernant les amines secondaires encombrées, elles peuvent être choisies, seule ou en mélange, parmi la N-(2'-hydroxyéthyl)-2-amino-2-méthyl-1-propanol, la N-(2'-hydroxypropyl)-2-amino-2-méthyl-1-propanol, la N-(2'-hydroxybutyl)-2-amino-2-methyl-1-propanol.

Dans les mélanges d'amines tertiaires et d'amines primaires ou secondaires, les amines primaires ou secondaires (activateurs) peuvent être choisies parmi le groupe comportant, la Monoéthanolamine, la Diéthanolamine, la N-butyléthanolamine, la Aminoéthyléthanolamine, la Diglycolamine, la Pipérazine, la 1-Méthylpipérazine, la 2-Méthylpipérazine, la N-(2-hydroxyéthyl)pipérazine, la N-(2-aminoéthyl)pipérazine, la Morpholine, la 3-(méthylamino)propylamine, la 1,6-hexanediamine et tous ses dérivés diversement N-alkylés tels par exemple la N,N'-diméthyl-1,6-hexanediamine, la N-méthyl-1,6-hexanediamine ou la N,N',N'-triméthyl-1,6-hexanediamine.

Enfin, la solution absorbante peut être choisie parmi le groupe constitué du sulfolane, le méthanol, la N-formyl morpholine, l'acétyl morpholine, le carbonate de propylène, le diméthyl éther polyethylène glycol ou la N-méthyl pyrrolidone ou un mélange d'amine avec un solvant physique et de l'eau.

### Exemples

Les exemples exposés ci-après illustrent le fonctionnement et les avantages du procédé selon l'invention. Le premier exemple est donné à titre comparatif et illustre un procédé selon l'art antérieur. Le second exemple illustre le fonctionnement du procédé selon le mode de réalisation de l'invention. Enfin, le troisième exemple permet d'illustrer la performance de la présente invention pour le traitement des gaz comportant des teneurs plus importantes en composés aromatiques (BTX).

Dans les exemples 1 et 2, on cherche à traiter 8.3 MMSm³/j d'un gaz naturel dont la composition est donnée Tableau 1. Les conditions standards sont 15 °C et 1 atm. Dans la suite du document, le terme HC désigne l'ensemble des coupes hydrocarbures depuis le méthane (C₁) et comprenant également les aromatiques. Pour ces exemples, deux cas d'études sont présentés :
- le cas max CO₂, correspondant à la teneur maximale en CO₂ du gaz à traiter
- le cas max HC, correspondant à un cas appauvri en CO₂ mais riche en HC lourds

**Tableau 1 - Composition du gaz brut à traiter**

| **Gaz Brut** | **Cas Max CO₂ %mol sec** | **Cas Max HC %mol sec** |
|---|---|---|
| **CO₂** | 5.0484 | 2.3932 |
| **H₂S** | 0.0005 | 0.0005 |
| **N₂** | 0.3405 | 0.4935 |
| **C₁** | 93.1154 | 92.6 |
| **C₂** | 1.2419 | 3.3586 |
| **C₃** | 0.2107 | 0.6955 |
| **C₄** | 0.0335 | 0.2164 |
| **C₅** | 0.0058 | 0.0879 |
| **C₆+ hors aromatiques** | 0.0027 | 0.1496 |
| **Benzène** | 0.0003 | 0.0019 |
| **Toluène** | 0.0001 | 0.0011 |
| **Xylènes** | 0.0002 | 0.0018 |

| | | |
|---|---|---|
| C₆+ désigne l'ensemble des coupes aliphatiques de C₆ à C₁₂. | | |

Ce gaz entre dans l'absorbeur à une température de 52 °C sous une pression de 68.5 bars où il est mis en contact avec une solution aqueuse de MDEA (397 g/l) activée à la HEP (80 g/l). Le solvant arrive dans la colonne d'absorption à une température de 60 °C et à un débit de 290 Sm³/h pour le cas Max CO₂ et 145 Sm³/h pour le cas Max HC. La colonne d'absorption est équipée de garnissage structuré. La hauteur de la zone d'absorption a été optimisée de façon à respecter les spécifications sur le gaz traité.

Les spécifications requises sont les suivantes :
- 2 %mol de CO₂ (1.8 % calculé) dans le gaz traité
- 1.45 ppm d'H₂S dans le gaz traité
- 150 mg/Nm³ de VOC sur le gaz acide

Le gaz naturel après traitement sort à un débit de 8 MMSm³/j avec la composition donnée au Tableau 2.

**Tableau 2 - Composition du gaz traité**

| **Gaz Traité** | **Cas Max CO₂ %mol sec** | **Cas Max HC %mol sec** |
|---|---|---|
| **CO₂** | 1.8092 | 0.6367 |
| **H₂S** | 0 | 0 |
| **N₂** | 0.3525 | 0.5026 |
| **C₁** | 96.2925 | 94.2672 |
| **C₂** | 1.284 | 3.4188 |
| **C₃** | 0.2179 | 0.708 |
| **C₄** | 0.0347 | 0.2202 |
| **C₅** | 0.0059 | 0.0896 |
| **C₆+ hors aromatiques** | 0.0027 | 0.1521 |
| **Benzène** | 0.0003 | 0.0019 |
| **Toluène** | 0.0001 | 0.0011 |
| **Xylènes** | 0.0002 | 0.0018 |

### 1.1 Exemple 1: Procédé selon l'art antérieur

Dans cet exemple, le schéma mis en oeuvre est illustré figure 2. Il ne contient pas le dispositif de contrôle de la teneur en HC dans le gaz acide.

Avec ce procédé, la composition du gaz acide obtenu en tête de régénérateur est donnée par le Tableau 3.

**Tableau 3 - Composition du gaz acide obtenu avec un procédé selon l'art antérieur**

| **Gaz Traité** | **Cas Max CO₂ %mol sec** | **Cas Max HC %mol sec** |
|---|---|---|
| **CO₂** | 99.69 | 99.66 |
| | ppmv sec | |
| **H₂S** | 151 | 282 |
| **N₂** | 3.5 | 4.6 |
| **C₁** | 2793 | 2784 |
| **C₂** | 51 | 138 |
| **C₃** | 6 | 21 |
| **C₄** | 3.5 | 6 |
| **C₅** | 1 | 1 |
| **C₆+ hors aromatiques** | 4 | 63 |
| **Cycloalcanes** | 0 | 3 |
| **Benzène** | 3.5 | 4 |
| **Toluène** | 1 | 17 |
| **Ethyl Benzene** | 1 | 25 |
| **Xylènes** | 2 | 19 |

Les teneurs VOC dans le gaz acide sont les suivantes :
- Cas Max CO₂: 1600 mg/Nm³
- Cas Max HC : 3100 mg/Nm³

Dans les deux cas, la spécification VOC dans le gaz acide n'étant pas respectée, il est nécessaire de mettre en oeuvre un incinérateur dédié au gaz acide. Dans ce cas, les dimensions de l'incinérateur, de modèle vertical à tirage naturel sont : Diamètre de la chambre de combustion : 3 500 mm, Hauteur de la chambre de combustion : 12 000 mm, Hauteur de la cheminée : 45 mètres.

La consommation de Gaz de fuel dédiée à l'incinération du gaz acide est estimée à 726 kg/h.

### 1.2 Exemple 2 : Procédé selon l'invention

L'invention consiste à mettre en oeuvre une colonne à basse pression qui, après une légère préchauffe, permet de détendre l'amine riche pour évaporer les HC (par exemple les VOC) dissous dans le solvant tout en contrôlant la perte en CO₂ et la taille du régénérateur en aval. Le gaz de flash ainsi obtenu est incinéré dans un incinérateur dédié. Dans cet exemple, la colonne de flash LP fonctionne aux conditions suivantes :
- Température de 75 °C sous 1.5 bars pour le cas Max CO₂
- Température de 77 °C sous 1.5 bars pour le cas Max HC

Les équipements additionnels illustrés figure 1 sont les suivants :
- Échangeur 9 pour préchauffe de l'amine riche (charge 4.5 MW).
- Colonne LP-Flash 12 (diamètre 3 m, hauteur : 10.8 m dont 1 lit de 2 m de garnissage).
- Pompe de circulation 15 (Puissance hydraulique = 52kW).
- Incinérateur LP Gaz de Flash (vertical à tirage naturel, diamètre de la chambre : 1 500 mm, hauteur de la chambre de combustion : 3 000 mm, cheminée 35 m).

On aurait pu s'affranchir du ballon de flash MP 6.

Avec ce procédé, la composition du gaz acide obtenu en tête de régénérateur est donnée par le Tableau 4.

**Tableau 4 - Composition du gaz acide obtenu avec un procédé selon la présente invention**

| **Gaz Traité** | **Cas Max CO₂ %mol sec** | **Cas Max HC %mol sec** |
|---|---|---|
| **CO₂** | 99.9809 | 99.9677 |
| | Ppmv sec | Ppmv sec |
| **H₂S** | 155 | 298 |
| **N₂** | 0 | 0 |
| **C₁** | 32 | 12 |
| **C₂** | 1 | 1 |
| **C₃** | 0 | 0 |
| **C₄** | 0 | 0 |
| **C₅** | 0 | 0 |
| **C₆+ hors aromatiques** | 1 | 1 |
| **Cycloalcanes** | 0 | 0 |
| **Benzène** | 1 | 6 |
| **Toluène** | 1 | 3 |
| **Ethyl Benzene** | 1 | 4 |
| **Xylènes** | 0 | 2 |

Les teneurs VOC dans le gaz acide sont les suivantes :
- Cas Max CO₂: 30 mg/Nm³
- Cas Max HC : 60 mg/Nm³

Dans les deux cas, la spécification VOC dans le gaz acide étant respectée, il n'est plus nécessaire de mettre en oeuvre un incinérateur dédié au gaz acide.

En cas de compression et de refroidissement du gaz acide mis en pression, l'eau condensée par cette étape est nettement moins polluée par des hydrocarbures liquides que dans le procédé selon l'art antérieur. Il est alors possible de recycler cette eau sans traitement de purification des HC liquides.

Pour ce cas, la consommation de Gaz de fuel dédiée à l'incinération LP est estimée à 15 kg/h.

### 1.3 Exemple 3 : Cas d'un gaz fortement chargé en aromatiques

Cet exemple compare les teneurs en VOC d'un gaz acide issu du traitement d'un gaz brut riche en BTX par :
- Le procédé selon l'art antérieur illustré figure 2.
- Le procédé selon la présente invention décrit figure 1.

Dans cet exemple, seules les teneurs en VOC du gaz acide ainsi que les consommations de Gaz de fuel dédiées à l'incinération sont comparées.

Pour le procédé selon l'invention, la colonne de flash LP fonctionne à 87°C sous
1.5 bar.

On veut traiter 76 t/h d'un gaz brut contenant 3 % de CO₂, 14 ppm d'H₂S et
318 ppmv de BTX. La composition de ce gaz est donnée dans le Tableau 5 suivant

**Tableau 5 - Composition du gaz de charge**

| **NOM DU FLUX** | Gaz de charge |
|---|---|
| **PRESSION (bar)** | 64.1 |
| **TEMPERATURE (deg.C)** | 36.82 |
| **Composition (%mol sec)** | |
| DIOXYDE DE CARBONE | 3.0409 |
| SULFURE D'HYDROGÈNE | 0.0014 |
| H₂O | |
| N₂ | 0.8052 |
| H₂ | 0.018 |
| METHANE | 90.8092 |
| ETHANE | 4.1082 |
| PROPANE | 0.7592 |
| ISOBUTANE | 0.127 |
| N-BUTANE | 0.129 |
| ISOPENTANE | 0.058 |
| N-PENTANE | 0.026 |
| N-HEXANE | 0.0578 |
| N-HEPTANE | 0.024 |
| N-OCTANE | 0.0029 |
| N-NONANE | 0.0011 |
| BENZENE | 0.03 |
| TOLUENE | 0.0013 |
| ETHYL-BENZENE | 0.0005 |
| **Total HC hors BTX** | **96.1024** |
| **Total BTX** | **0.0318** |
| **Total HC** | **96.1342** |

Ce gaz entre dans l'absorbeur à une température de 35.7 °C sous une pression de 64.1 bars où il est mis en contact avec une solution aqueuse de MDEA (397 g/l) activée à la HEP (80 g/l). Le solvant arrive dans la colonne d'absorption à une température de 44.5 °C et à un débit de 78 S m³/h. La colonne d'absorption est équipée d'une section plateaux et d'une section en garnissage structuré. La hauteur et l'agencement de la zone d'absorption ont été optimisés de façon à respecter les spécifications sur le gaz traité (50 ppmv de CO₂ et 3 ppmv d'H₂S). La composition du gaz traité est donnée par le Tableau 6 ci-après.

**Tableau 6 - Composition du gaz traité**

| **NOM DU FLUX** | GAZ TRAITÉ |
|---|---|
| **PRESSION (bar)** | 63.2 |
| **TEMPERATURE (deg.C)** | 37.93 |
| **Composition (%mol)** | |
| DIOXYDE DE CARBONE | 0.0014 |
| SULFURE D'HYDROGÈNE | |
| H₂O | 0.1396 |
| N₂ | 0.8297 |
| H₂ | 0.0186 |
| METHANE | 93.5285 |
| ETHANE | 4.2307 |
| PROPANE | 0.782 |
| ISOBUTANE | 0.1309 |
| N-BUTANE | 0.1329 |
| ISOPENTANE | 0.0598 |
| N-PENTANE | 0.0268 |
| N-HEXANE | 0.0595 |
| N-HEPTANE | 0.0247 |
| N-OCTANE | 0.003 |
| N-NONANE | 0.0011 |
| BENZENE | 0.0292 |
| TOLUENE | 0.0013 |
| ETHYL-BENZENE | 0.0005 |
| **Total HC hors BTX** | **98.9799** |
| **Total BTX** | **0.031** |
| **Total HC** | **99.0109** |

L'amine chargée en gaz acides obtenue en fond d'absorbeur à une température de 60 °C est ensuite détendue dans un ballon de flash dit MP (Medium Pressure) sous 7.3 bar de façon à évaporer une partie des HC légers pour constituer du Gaz de fuel. Selon l'art antérieur, l'amine riche, une fois détendue, est préchauffée par l'amine régénérée avant d'être envoyée au régénérateur afin d'obtenir un solvant pauvre en gaz acide et un gaz dit gaz acide en tête contenant essentiellement du CO₂, de l'H₂S et une fraction d'hydrocarbures. Selon l'invention, l'amine riche détendue est préchauffée puis détendue une nouvelle fois (flash LP) à basse pression (ici 1.5 bar) avant de traverser l'échangeur amine/amine et d'être régénérée. Cette étape supplémentaire permet d'évaporer une fraction supplémentaire d'hydrocarbure plus lourd dont notamment des composés aromatiques. Les compositions des gaz acides et du gaz de flash LP sont données dans le Tableau 7 ci-après. Ce tableau montre aussi l'évolution des débits et des teneurs en VOC de ces gaz en fonction du type de procédé mis en oeuvre. Ces valeurs permettent de déterminer s'il est nécessaire d'incinérer le gaz acide et, si oui, quelle sera la consommation de Gaz de fuel Associée.

**Tableau 7 - Composition du gaz acide et du gaz de flash selon le procédé considéré**

| **PROCEDE** | **Selon art antérieur** | **Selon invention** | |
|---|---|---|---|
| **NOM DU FLUX** | **Gaz Acide vers Incinérateur** | **Gaz LP vers Incinérateur** | **ACID GAS vers évent** |
| **PRESSION (bar)** | 1.2 | 1.2 | 1.2 |
| **TEMPERATURE (deg.C)** | 36.66 | 87.11 | 36.66 |
| **Composition (%mol)** | | | |
| DIOXIDE DE CARBONE | 95.5907 | 62.642 | 95.8987 |
| SULFURE D'HYDROGÈNE | 0.044 | 0.0281 | 0.0445 |
| H₂O | 4.051 | 36.5875 | 4.051 |
| N₂ | 0.0007 | 0.0016 | |
| H₂ | | | |
| METHANE | 0.245 | 0.5855 | 0.0005 |
| ETHANE | 0.0152 | 0.0363 | |
| PROPANE | 0.002 | 0.0048 | |
| ISOBUTANE | 0.0003 | 0.0007 | |
| N-BUTANE | 0.0003 | 0.0008 | |
| ISOPENTANE | 0.0001 | 0.0002 | |
| N-PENTANE | | 0.0001 | |
| N-HEXANE | 0.0003 | 0.0008 | |
| N-HEPTANE | 0.0003 | 0.0007 | |
| N-OCTANE | 0.0001 | 0.0002 | |
| N-NONANE | 0.0001 | 0.0002 | |
| BENZENE | 0.0474 | 0.105 | 0.0049 |
| TOLUENE | 0.0019 | 0.0042 | 0.0002 |
| ETHYL-BENZENE | 0.0007 | 0.0015 | 0.0001 |
| **Total HC hors BTX** | **0.2637** | **0.6303** | **0.0005** |
| **Total BTX** | **0.05** | **0.1107** | **0.0052** |
| **Total HC** | **0.3137** | **0.741** | **0.0057** |
| DEBIT VOL. (Nm3/h) | 3165 | 1252 | 2167 |
| Teneur VOC (mg/Nm3) | **3627.3** | 8846.7 | **187** |
| Teneur BTX (mg/Nm3) | **1675.3** | 3923.8 | **183.1** |

Pour le procédé selon la présente invention, il n'est pas nécessaire d'incinérer le gaz acide du fait du gain de 95 % sur la teneur en VOC et notamment du gain de 89 % sur la teneur en composés aromatiques.

Dans les deux cas, il est toutefois nécessaire de prévoir un incinérateur :
- pour incinérer le gaz acide dans le cas du procédé selon l'art antérieur
- pour incinérer le gaz de flash LP dans le cas de la présente invention

Cet incinérateur sera cependant plus important et donc plus coûteux dans le cas du procédé selon l'art antérieur car le débit de gaz à incinérer est supérieur (plus 59 %). Le coût des incinérateurs n'a pas été estimé mais la consommation de Gaz de fuel a été évaluée pour illustrer le gain réalisé en mettant en oeuvre la présente invention. Selon l'art antérieur, l'incinération du gaz acide consomme environ 186 kg/h de Gaz de fuel contre 28 kg/h pour l'incinération du gaz de flash LP dans le cas de la présente invention, soit un gain de 85 %.

On constate que l'eau récupérable dans le gaz acide, si elle est condensée après une étape de compression du gaz acide, contiendra nettement moins d'hydrocarbures.

### Utilisation

Selon l'invention le gaz peut être un gaz naturel, un gaz comportant au moins 50 ppmv d'hydrocarbures, et/ou un gaz comportant moins de 100 ppmv d'H₂S.

La fraction gazeuse comportant des hydrocarbures obtenue à l'étape b) peut être envoyée dans une unité de traitement autre qu'un incinérateur, par exemple le réseau de gaz de combustion.

L'invention concerne également, un procédé de récupération assistée d'hydrocarbures (EOR) dans lequel on injecte dans un milieu souterrain l'effluent gazeux riche en CO₂ obtenu à l'issue de l'étape c). Cette injection peut se faire via un puits afin de faciliter l'étape d'extraction d'hydrocarbures.

## Revendications

1. Procédé de décarbonatation par lavage avec un solvant d'un gaz hydrocarboné, par exemple un gaz naturel, dans lequel on effectue les étapes suivantes :
a) on met en contact ledit gaz avec une solution absorbante de manière à obtenir un gaz appauvri en CO₂ et une solution absorbante chargée en CO₂ ;
b) on chauffe et on détend la solution absorbante chargée en CO₂, à une température comprise entre 50°C et 140°C, et à une pression comprise entre 1.5 et 6 bars, de manière à libérer une fraction gazeuse comportant des hydrocarbures et à obtenir une solution absorbante appauvrie en hydrocarbures, ladite pression et ladite température étant choisies de sorte que ladite fraction gazeuse comporte au moins 50% des hydrocarbures contenu dans ladite solution absorbante chargée en CO₂ et au plus 35 % de CO₂ contenu dans ladite solution absorbante chargée en CO₂ ;
c) on régénère thermiquement par strippage ou par distillation la solution absorbante appauvrie en composés hydrocarbures de manière à libérer un effluent gazeux riche en CO₂ et à obtenir une solution absorbante régénérée,
et dans lequel avant l'étape b) on détend la solution absorbante chargée en CO₂ à une pression P2 comprise entre ladite pression utilisée à l'étape b) et une pression utilisée à l'étape a), et à une température sensiblement identique à celle de ladite solution absorbante chargée en CO₂ obtenue après l'étape a).

2. Procédé selon la revendication 1, dans lequel ladite pression et ladite température sont choisies de sorte que ladite fraction gazeuse comporte au moins 70% des hydrocarbures contenu dans ladite solution absorbante chargée en CO₂ et moins de 30 % de CO₂ contenu dans ladite solution absorbante chargée en CO₂.

3. Procédé selon l'une des revendications précédentes, dans lequel ladite température est comprise entre celle de ladite solution absorbante chargée en CO₂ obtenue après l'étape a) et celle de ladite solution absorbante régénéré obtenu après l'étape c), et ladite pression est supérieure à la pression atmosphérique.

4. Procédé selon l'une des revendications précédentes, dans lequel au moins une partie de la solution absorbante régénérée obtenue à l'étape c) est recyclée à l'étape a) en tant que solution absorbante.

5. Procédé selon la revendication 1, dans lequel ladite pression P2 est comprise entre 5 et 15 bars.

6. Procédé selon l'une des revendications précédentes, dans lequel la solution absorbante comporte une amine ou un mélange d'amines en solution dans de l'eau.

7. Procédé selon la revendication 6, dans lequel l'amine est choisie parmi le groupe comportant les amines primaires, les amines secondaires, les amines secondaires stériquement encombrées, les amines tertiaires et des mélanges d'amines tertiaires et d'amines primaires ou secondaires.

8. Procédé selon la revendication 7, dans lequel l'amine primaire est choisie, seule ou en mélange, parmi la monoéthanolamine (MEA), l'aminoéthyléthanolamine (AEEA), la diglycolamine, la 2-amino-2-méthyl-1-propanol et ses dérivés non N substitués.

9. Procédé selon l'une des revendication 7 et 8, dans lequel l'amine secondaire est choisie, seule ou en mélange, parmi la diéthanolamine (DEA), la diisopropanolamine (DIPA), la pipérazine et ses dérivés dans lesquels au moins un atome d'azote n'est pas substitué, la morpholine et ses dérivés non N substitués, la pipéridine et ses dérivés non N substitués, la N-(2'-hydroxyéthyl)-2-amino-2-méthyl-1-propanol, la N-(2'-hydroxypropyl)-2-amino-2-méthyl-1-propanol, la N-(2'-hydroxybutyl)-2-amino-2-méthyl-1-propanol.

10. Procédé selon l'une des revendication 7 à 9, dans lequel l'amine tertiaire est choisie, seule ou en mélange, parmi la méthyldiéthanolamine (MDEA), la triéthanolamine (TEA), l'éthyldiéthanolamine, la diéthyléthanolamine, la diméthyléthanolamine, la 1-méthyl-4-(3-diméthylaminopropyl)-pipérazine, la 1-éthyl-4-(diéthylaminoéthyl), la 1-méthyl-4-hydroxy-pipéridine, la 1-méthyl-2-hydroxyméthyl-pipéridine, la 1,2-bis-(2-diméthylaminoéthoxy)-éthane, le Bis(diméthylamino-3-propyl)éther, le Bis(diéthylamino-3-propyl)éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther, la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, la N-isopropyl-N-(3-méthoxypropyl)-1-amino-2-butanol, la 1-(4-morpholino)-2-(méthylisopropylamino)-éthane, la 1-(4-morpholino)-2-(méthyltertiobutylamino)- éthane, la 1-(4-morpholino)-2-(diisopropylamino)-éthane, la 1-(4-morpholino)-2-(1-pipéridinyl)-éthane et la tertiobutyldiéthanolamine.

11. Procédé selon l'une des revendication 7 à 10, dans lequel l'amine secondaire encombrée est choisie, seule ou en mélange, parmi la N-(2'-hydroxyéthyl)-2-amino-2-méthyl-1-propanol, la N-(2'-hydroxypropyl)-2-amino-2-méthyl-1-propanol, la N-(2'-hydroxybutyl)-2-amino-2-méthyl-1-propanol.

12. Procédé selon l'une des revendication 7 à 11, dans lequel dans les mélanges d'amines tertiaires et d'amines primaires ou secondaires, les amines primaires ou secondaires sont choisies parmi le groupe comportant, la Monoéthanolamine, la Diéthanolamine, la N-butyléthanolamine, la Aminoéthyléthanolamine, la Diglycolamine, la Pipérazine, la 1-Méthylpipérazine, la 2-Méthylpipérazine, la N-(2-hydroxyéthyl)pipérazine, la N-(2-aminoéthyl)pipérazine, la Morpholine, la 3-(méthylamino)propylamine, la 1,6-hexanediamine et tous ses dérivés diversement N-alkylés tels par exemple la N,N'-diméthyl-1,6-hexanediamine, la N-méthyl-1,6-hexanediamine ou la N,N',N'-triméthyl-1,6-hexanediamine.

13. Procédé selon l'une des revendications 1 à 12, dans lequel la solution absorbante est choisie parmi le groupe constitué du sulfolane, le méthanol, la N-formyl morpholine, l'acétyl morpholine, le carbonate de propylène, le diméthyl éther polyethylène glycol ou la N-méthyl pyrrolidone ou un mélange d'amine avec un solvant physique et de l'eau.

14. Procédé selon l'une des revendications précédentes, dans lequel le gaz est un gaz naturel.

15. Procédé selon l'une des revendications précédentes, dans lequel le gaz comporte au moins 50 ppmv d'hydrocarbures.

16. Procédé selon l'une des revendications précédentes, dans lequel le gaz comporte moins de 100 ppmv d'H₂S.

17. Procédé selon une des revendications précédentes dans lequel on injecte dans un milieu souterrain ledit effluent gazeux riche en CO₂ obtenu à l'issue de l'étape c), dans un procédé de récupération assistée d'hydrocarbures.

## Patentansprüche

1. Verfahren zur Entkarbonisierung eines Kohlenwasserstoffgases, beispielsweise eines Erdgases, durch Waschen mit einem Lösungsmittel, bei dem die folgenden Schritte ausgeführt werden:
a) Inkontaktbringen des Gases mit einer absorbierenden Lösung, um ein an CO₂ armes Gas und eine mit CO₂ angereicherte absorbierende Lösung zu erhalten;
b) Erhitzen und Expandieren der mit CO₂ angereicherten absorbierenden Lösung bei einer Temperatur zwischen 50°C und 140°C und bei einem Druck zwischen 1,5 und 6 bar, um eine Gasfraktion, umfassend Kohlenwasserstoffe, freizusetzen und eine an Kohlenwasserstoffen arme absorbierende Lösung zu erhalten, wobei der Druck und die Temperatur derart gewählt sind, dass die Gasfraktion mindestens 50 % der in der mit CO₂ angereicherten absorbierenden Lösung enthaltenen Kohlenwasserstoffe und höchstens 35 % CO₂, das in der mit CO₂ angereicherten absorbierenden Lösung enthalten ist, umfasst;
c) thermisches Regenerieren durch Strippen oder Destillieren der an Kohlenwasserstoffverbindungen armen absorbierenden Lösung, um einen an CO₂ reichen Gasabfluss freizusetzen und eine regenerierte absorbierende Lösung zu erhalten,
und bei dem vor dem Schritt b) die mit CO₂ angereicherte absorbierende Lösung bei einem Druck P2 zwischen dem in Schritt b) verwendeten Druck und einem in Schritt a) verwendeten Druck und bei einer Temperatur im Wesentlichen identisch mit jener der mit CO₂ angereicherten absorbierenden Lösung, die nach Schritt a) erhalten wird, expandiert wird.

2. Verfahren nach Anspruch 1, bei dem der Druck und die Temperatur derart gewählt sind, dass die Gasfraktion mindestens 70 % der in der mit CO₂ angereicherten Lösung enthaltenen Gasfraktion und mindestens 30 % CO₂, das in der mit CO₂ angereicherten absorbierenden Lösung enthalten ist, umfasst.

3. Verfahren nach einem der vorhergehenden Ansprüche, bei dem die Temperatur zwischen jener der mit CO₂ angereicherten absorbierenden Lösung, die nach Schritt a) erhalten wird, und jener der regenerierten absorbierenden Lösung, die nach Schritt c) erhalten wird, liegt, und der Druck höher als der Luftdruck ist.

4. Verfahren nach einem der vorhergehenden Ansprüche, bei dem mindestens ein Teil der nach Schritt c) erhaltenen regenerierten absorbierenden Lösung in Schritt a) als absorbierende Lösung wiederverwertet wird.

5. Verfahren nach Anspruch 1, bei dem der Druck P2 zwischen 5 und 15 bar beträgt.

6. Verfahren nach einem der vorhergehenden Ansprüche, bei dem die absorbierende Lösung ein Amin oder ein Gemisch von Aminen in Lösung in Wasser.

7. Verfahren nach Anspruch 6, bei dem das Amin in der Gruppe ausgewählt ist, umfassend die primären Amine, die sekundären Amine, die sterisch gehinderten sekundären Amine, die tertiären Amine und Gemische von tertiären Aminen und primären oder sekundären Aminen.

8. Verfahren nach Anspruch 7, bei dem das primäre Amin alleine oder im Gemisch ausgewählt ist unter dem Monoethanolamin (MEA), dem Aminoethylethanolamin (AEEA), dem Diglykolamin, dem 2-Amino-2-Methyl-1-Propanol und seinen nicht N-substituierten Derivaten.

9. Verfahren nach einem der Ansprüche 7 und 8, bei dem das sekundäre Amin alleine oder im Gemisch ausgewählt ist unter dem Diethanolamin (DEA), dem Diisopropanolamin (DIPA), dem Piperazin und seinen Derivaten, bei denen mindestens ein Stickstoffatom nicht substituiert ist, dem Morpholin und seinen nicht N-substituierten Derivaten, dem Piperidin und seinen nicht N-substituierten Derivaten, dem N-(2'-Hydroxyethyl)-2-Amino-2-Methyl-1 -Propanol, dem N-(2'-Hydroxypropyl)-2-Amino-2-Methyl-1-Propanol, dem N-(2'-Hydroxybutyl)-2-Amino-2-Methyl-1-Propanol.

10. Verfahren nach einem der Ansprüche 7 bis 9, bei dem das tertiäre Amin alleine oder im Gemisch ausgewählt ist unter dem Methyldiethanolamin (MDEA), dem Triethanolamin (TEA), dem Ethyldiethanolamin, dem Dimethylethanolamin, dem 1-Methyl-4-(3-Dimethylaminopropyl)-Piperazin, dem 1-Ethyl-4-(Diethylaminoethyl), dem 1-Methyl-4-Hydroxy-Piperidin, dem 1-Methyl-2-Hydroxymethyl-Piperidin, dem 1,2-bis-(2-Dimetyhlaminoethoxy)-Ethan, dem Bis(Dimethylamino-2-Ethyl)-(Dimethylamino-3-Propyl)-Ether, dem (Diethylamino-2-Ethyl)-(Dimethylamino-3-Propyl)-Ether, dem (Dimethylamino-2-Ethyl)-(Diethylamino-3-Propyl)-Ether, dem (Diethylamino-2-Ethyl)-(Diethylamino-3-Propyl)-Ether, dem N-Methyl-N-(3-Methoxypropyl)-2-Aminoethanol, dem N-Methyl-N-(3-Methoxypropyl)-1-Amino-2-Propanol, dem N-Methyl-N-(3-Methoxypropyl)-1-Amino-2-Butanol, dem N-Ethyl-N-(3-Methoxypropyl)-2-Aminoethanol, dem N-Ethyl-N-(3-Methoxypropyl)-1-Amino-2-Propanol, dem N-Ethyl-N-(3-Methoxypropyl)-1-Amino-2-Butanol, dem N-lsopropyl-N-(3-Methoxypropyl)-2-Aminoethanol, dem N-Isopropyl-N-(3-Methoxypropyl)-1-Amino-2-Propanol, dem N-Isopropyl-N-(3-Methoxypropyl)-1-Amino-2-Butanol, dem 1-(4-Morpholino)-2-(Methylisopropylamino)-Ethan, dem (1-(4-Morpholino)-2-(Methyltertiobutylamino)-Ethan, dem 1-(4-Morpholino)-2-(Diisopropylamino)-Ethan, dem 1-4(-Morpholino)-2-(1-Piperidinyl)-Ethan und dem Tertiobutyldietanolamin.

11. Verfahren nach einem der Ansprüche 7 bis 10, bei dem das gehinderte sekundäre Amin alleine oder im Gemisch ausgewählt ist unter dem N-(2'-Hydroxyethyl)-2-Amino-2-Methyl-1-Propanol, dem N-(2'-Hydroxypropyl)-2-Amino-2-Methyl-1-Propanol, dem N-(2'-Hydroxybutyl)-2-Amino-2-Methyl-1-Propanol.

12. Verfahren nach einem der Ansprüche 7 bis 11, bei dem in den Gemischen von tertiären Aminen und primären oder sekundären Aminen die primären oder sekundären Amine in der Gruppe ausgewählt sind, umfassend das Monoethanolamin, das Diethanolamin, das N-Butylethanolamin, das Aminoethylethanolamin, das Diglykolamin, das Piperazin, das 1-Methylpiperazin, das 2-Methylpiperazin, das N-(2-Hydroxyethal)piperazin, das N-(2-Aminoethyl)piperazin, das Morpholin, das 3-(Methylamino)Propylamin, das 1,6-Hexanamin und alle seine divers N-alkylierten Derivate, wie beispielsweise das N,N'-Dimethyl-1,6-Hexandiamin, das N-Methyl-1,6-Hexandiamin oder das N,N',N'-trimethyl-1,6-Hexandiamin.

13. Verfahren nach einem der Ansprüche 1 bis 12, bei dem die absorbierende Lösung in der Gruppe ausgewählt ist, bestehend aus Sulfolan, Methanol, N-Formylmorpholin, Acteylmorpholin, Propylencarbonat, Dimethyletherpolyethylenglykol oder N-Methylpyrrolidon oder einem Amingemisch mit einem physischen Lösungsmittel und Wasser.

14. Verfahren nach einem der vorhergehenden Ansprüche, bei dem das Gas ein Erdgas ist.

15. Verfahren nach einem der vorhergehenden Ansprüche, bei dem das Gas mindestens 50 ppmv Kohlenwasserstoffe umfasst.

16. Verfahren nach einem der vorhergehenden Ansprüche, bei dem das Gas weniger als 100 ppmv H₂S umfasst.

17. Verfahren nach einem der vorhergehenden Ansprüche, bei dem in ein unterirdisches Milieu der an CO₂ reiche Gasabfluss, der nach dem Schritt c) erhalten wird, in einem Verfahren der unterstützten Wiedergewinnung von Kohlenwasserstoffen eingeleitet wird.

## Claims

1. A method of decarbonating a hydrocarbon gas, a natural gas for example, by washing with a solvent, wherein the following stages are carried out:
a) contacting said gas with an absorbent solution so as to obtain a CO₂-depleted gas and a CO₂-laden absorbent solution,
b) heating and expanding the CO₂-laden absorbent solution, at a temperature ranging between 50°C and 140°C, and at a pressure ranging between 1.5 and 6 bar so as to release a hydrocarbon-containing gaseous fraction and to obtain a hydrocarbon-depleted absorbent solution, said temperature and said pressure being so selected that said gaseous fraction comprises at least 50 % of the hydrocarbons contained in said CO₂-laden absorbent solution and at most 35 % of the CO₂ contained in said CO₂-laden absorbent solution,
c) thermally regenerating by stripping or distillation the hydrocarbon-depleted absorbent solution so as to release a CO₂-rich gaseous effluent and to obtain a regenerated absorbent solution,
and wherein prior to stage b), the CO₂-laden absorbent solution is expanded at a pressure P2 ranging between said pressure used in stage b) and a pressure used in stage a), and at a temperature substantially identical to that of said CO₂-laden absorbent solution obtained after stage a).

2. A method as claimed in claim 1, wherein said pressure and said temperature are so selected that said gaseous fraction comprises at least 70 % of the hydrocarbons contained in said CO₂-laden absorbent solution and less than 30 % of the CO₂ contained in said CO₂-laden absorbent solution.

3. A method as claimed in any one of the previous claims, wherein said temperature ranges between the temperature of said CO₂-laden absorbent solution obtained after stage a) and that of said regenerated absorbent solution obtained after stage c), and said pressure is above atmospheric pressure.

4. A method as claimed in any one of the previous claims, wherein at least part of the regenerated absorbent solution obtained in stage c) is recycled to stage a) as absorbent solution.

5. A method as claimed in claim 1, wherein said pressure P2 ranges between 5 and 15 bar.

6. A method as claimed in any one of the previous claims, wherein the absorbent solution comprises an amine or an amine mixture in solution in water.

7. A method as claimed in claim 6, wherein the amine is selected from among the group comprising primary amines, secondary amines, sterically hindered secondary amines, tertiary amines, and mixtures of tertiary amines and primary or secondary amines.

8. A method as claimed in claim 7, wherein the primary amine is selected, alone or in admixture, from among monoethanolamine (MEA), aminoethyl-ethanolamine (AEEA), diglycolamine, 2-amino-2-methyl-1-propanol and the non-N-substituted derivatives thereof.

9. A method as claimed in any one of claims 7 and 8, wherein the secondary amine is selected, alone or in admixture, from among diethanolamine (DEA), diisopropanolamine (DIPA), piperazine and its derivatives wherein at least one nitrogen atom is not substituted, morpholine and its non-N-substituted derivatives, piperidine and its non-N-substituted derivatives, N-(2'-hydroxyethyl)-2-amino-2-methyl-1-propanol, N-(2'-hydroxypropyl)-2-amino-2-methyl-1-propanol, N-(2'-hydroxybutyl)-2-amino-2-methyl-1-propanol.

10. A method as claimed in any one of claims 7 to 9, wherein the tertiary amine is selected, alone or in admixture, from among methyldiethanolamine (MDEA), triethanol-amine (TEA), ethyldiethanolamine, diethylethanolamine, dimethylethanolamine, 1-methyl-4-(3-dimethylaminopropyl)-piperazine, 1-ethyl-4-(diethylaminoethyl), 1-methyl-4-hydroxy-piperidine, 1-methyl-2-hydroxymethyl-piperidine, 1,2-bis-(2-dimethyl-amino-ethoxy)-ethane, Bis(dimethylamino-3-propyl)ether, Bis(diethylamino-3-propyl)ether, (dimethylamino-2-ethyl)-(dimethyl-amino-3-propyl)-ether, (diethylamino-2-ethyl)-(dimethylamino-3-propyl)-ether, (di-methylamino-2-ethyl)-(diethylamino-3-propyl)-ether, (diethylamino-2-ethyl)-(diethyl-amino-3-propyl)-ether, N-methyl-N-(3-methoxypropyl)-2-aminoethanol, N-methyl-N-(3-methoxypropyl)-1-amino-2-propanol, N-methyl-N-(3-methoxypropyl)-1-amino-2-butanol, N-ethyl-N-(3-methoxypropyl)-2-aminoethanol, N-ethyl-N-(3-methoxypropyl)-1-amino-2-propanol, N-ethyl-N-(3-methoxypropyl)-1-amino-2-butanol, N-isopropyl-N-(3-methoxy-propyl)-2-aminoethanol, N-isopropyl-N-(3-methoxypropyl)-1-amino-2-propanol, N-isopropyl-N-(3-methoxypropyl)-1-amino-2-butanol, 1-(4-morpholino)-2-(methyliso-propylamino)-ethane, 1-(4-morpholino)-2-(methyltertio-butylamino)-ethane, 1-(4-morpholino)-2-(diisopropylamino)-ethane, 1-(4-morpholino)-2-(1-piperidinyl)-ethane and tertiobutyldiethanolamine.

11. A method as claimed in any one of claims 7 to 10, wherein the hindered secondary amine is selected, alone or in admixture, from among N-(2'-hydroxyethyl)-2-amino-2-methyl-1-propanol, N-(2'-hydroxypropyl)-2-amino-2-methyl-1-propanol, N-(2'-hydroxybutyl)-2-amino-2-methyl-1-propanol.

12. A method as claimed in any one of claims 7 to 11 wherein, in the mixtures of tertiary amines and of primary or secondary amines, the primary or secondary amines are selected from the group comprising Monoethanolamine, Diethanolamine, N-butylethanolamine, Aminoethylethanolamine, Diglycolamine, Piperazine, 1-Methylpiperazine, 2-Methylpiperazine, N-(2-hydroxyethyl)piperazine, N-(2-aminoethyl)piperazine, Morpholine, 3-(methylamino)propylamine, 1,6-hexanediamine and all its diversely N-alkylated derivatives such as, for example, N,N'-dimethyl-1,6-hexanediamine, N-methyl-1,6-hexanediamine or N,N',N'-trimethyl-1,6-hexanediamine.

13. A method as claimed in any one of claims 1 to 12, wherein the absorbent solution is selected from the group made up of sulfolane, methanol, N-formyl morpholine, acetyl morpholine, propylene carbonate, dimethyl ether polyethylene glycol or N-methyl pyrrolidone, or an amine mixture with a physical solvent and water.

14. A method as claimed in any one of the previous claims, wherein the gas is a natural gas.

15. A method as claimed in any one of the previous claims, wherein the gas comprises at least 50 ppmv hydrocarbons.

16. A method as claimed in any one of the previous claims, wherein the gas comprises less than 100 ppmv H₂S.

17. A method as claimed in any one of the previous claims, wherein said CO₂-rich gaseous effluent obtained at the end of stage c) is injected into an underground medium in an enhanced oil recovery process.
